# EUROPEAN PATENT SPECIFICATION

(11) **EP 0 863 813 B1**
(45) Date of publication and mention of the grant of the patent: **02.01.2002**
(21) Application number: 96936536.0
(22) Date of filing: 16.10.1996
(51) Int. Cl.: B32B 27/08, E01F 9/04

(54) **DURABLE PAVEMENT MARKING TAPE WITH SCREENCOATED POLYURETHANE TOPCOAT**
DAUERHAFTES STRASSENMARKIERUNGSBAND MIT SIEBBESCHICHTETER POLYURETHAN-DECKSCHICHT
BANDE DE MARQUAGE DURABLE POUR DES CHAUSSEES QUI POSSEDE UNE COUCHE SUPERIEURE A BASE DE POLYURETHANE FORMANT ECRAN

(30) Priority: 22.11.1995 US 562041
(43) Date of publication of application: 16.09.1998
(73) Proprietor: MINNESOTA MINING AND MANUFACTURING COMPANY, St. Paul, Minnesota 55133-3427 (US)
(72) Inventor: GOEB, Siegfried, Rainer, Saint Paul, MN 55133-3427 (US); HARPER, James, H., C., Saint Paul, MN 55133-3427 (US)
(74) Representative: VOSSIUS & PARTNER
(86) International application number: US9616529
(87) International publication number: WO9718947

(56) References cited:
- EP-A- 0 101 084
- EP-A- 0 346 021
- EP-A- 0 683 268
- EP-A- 0 683 270
- US-A- 4 530 859
- US-A- 4 892 906
- US-A- 4 937 127

## Description

The present invention relates to an improved pavement marking material which may be adhered to a roadway to provide e.g. traffic control markings and a method for making such pavement marking material.

Pavement markings are important in order to provide visual guidance to motor vehicle drivers. Preformed pavement marking materials are used as traffic control markings for a variety of uses, such as short distance lane striping, stop bars, and pedestrian pavement markings at intersections. Typically, preformed pavement marking materials comprise a continuous, wear-resistant top layer overlying a flexible base sheet. Such materials are applied to substrates using pressure sensitive adhesive or contact cement.

For example, U.S. Pat. No. 4,020,211 discloses a preformed marking composite material comprising a continuous polyurethane top layer adhered to a flexible base sheet. These marking materials have a very high Young's modulus, well above 300,000 psi (2100 MPa). As a result, while these materials are very wear-resistant, these materials are so stiff and non-conformable that the entire composite material tends to come loose from irregular pavement surfaces due to poor adhesion to the pavement.

A more conformable preformed pavement marking material comprising a more elastic, continuous polyurethane wear layer adhered to a flexible base sheet is described in U.S. Pat. Nos. 4,248,932; 4,117,192; and 3,935,365. These materials have better initial conformance to irregular pavement surfaces due to the lower modulus of the polyurethane wear layer. The elastic nature of the polyurethane wear layer, though, produces elastic tensile stresses in the top layer as these marking materials are adhered and conformed to the pavement. Over time, these stresses tend to cause adhesive failure, after which the marking materials would come loose from the pavement.

U.S. Pat. No. 4,988,555 (Hedblom) describes a pavement marking material comprising a polyurethane bead bond overlying a flexible base sheet having protrusions on one surface. The bead bond covers selected portions of these protrusions.

U.S. Pat. App. Ser. No. 08/247,017 (Harper ; corresponding to EP-0 683 268) describes a pavement marking material with a flexible base sheet that is conformable to an irregular pavement surface. The wear-resistant polymeric top coat is applied to one surface of the base sheet as a non-continuous, or segmented layer. The segmented top layer is discontinuous in only the cross-web direction. The segments of the top coat are continuous in the down web direction.

Polyurethane sheets or coatings utilizing blocked isocyanates as crosslinkers are known. U.S. Pat. App. Ser. No. 08/244,355 (Goeb ; corresponding to US-5,653,573) teaches the use of a blocked isocyanate crosslinker in polyurethane label stock, while U.S. Pat. No. 4,892,906 (Pham) teaches the use of a blocked isocyanate crosslinker in a polyurethane coating for military hardware. However, patterned polyurethane coatings utilizing blocked isocyanate crosslinkers have not previously been used on pavement markings.

EP-A-683 268 refers to a pavement marking material comprising a flexible base sheet that is conformable an irregular to pavement surface and a polymeric layer which is discontinuous in one of the web directions but continuous in the other web direction and a plurality of particles embedded in and protruding from said discontinuous polymeric layer.

EP-A-683 270 refers to a pavement marking sheet material comprising a continuous polymeric base sheet having a plurality of upright reflectors on its upper surface whereby the upright reflectors are arranged in a specific selected manner.

What is needed is a pavement marking with the excellent durability characteristics of a tough wear-resistant, hard top layer, and the flexibility characteristics of a conformable base sheet, that will adhere well to irregular pavement surfaces while maintaining or increasing the reflectivity and skid-resistance of the pavement markings currently available.

The present invention provides an improved pavement marking material which comprises a relatively wear-resistant top layer which is patterned or discontinuous in both the down-web and cross-web directions. This patterned top layer is coated onto a flexible substantially flat base sheet by means of a continuous process such as a rotary screen printing process. To be commercially practical, a continuous process requires a coating composition with a pot-life on the order of several weeks or months. Pot-life is the length of time a material can reside in the coating equipment without becoming so viscous that it cannot be coated or that other properties of the material beginning to deteriorate. An extended pot-life may be attained by use of a blocked isocyanate crosslinker which does not crosslink at application temperatures.

Because of its discontinuous top layer, pavement markings of the invention can be conformed to irregular pavement surfaces without developing the elastic stresses that can lead to adhesive failure. Preferred pavement marking materials have the excellent durability characteristics of a tough, wear-resistant, hard top layer, while retaining the flexibility of an underlying conformance layer. As a result of these properties, pavement marking materials of the present invention have high initial and long term adhesions even to pavement having a rough or irregular surface. In addition to the excellent durability achieved herein, pavement markings of the invention can provide good retroreflective performance from a wide zone of approach, making them well-suited for areas where traffic approaches from many directions, e.g., intersections.

In brief summary, the invention provides a pavement marking material comprising a flexible substantially flat base sheet that is conformable to an irregular pavement surface and a durable, relatively wear-resistant non-continuous polymeric top layer. The polymeric top layer is discontinuous in both the down-web and cross-web directions. The invention also provides a method for making such a pavement marking material. The polymeric top layer comprises a plurality of segments adhered to one surface of the base sheet whereby each of the plurality of segments are separated in both the cross-web direction and the down-web direction by areas of the uncoated base sheet. A variety of shapes of segments may be used. The shape and size of the segments, as well as the distance between segments may be selected to give optimum physical properties. A plurality of particles are partially embedded in and protrude from the polymeric top layer. The particles may include reflective microspheres and skid-resistant particles.

A coating which is discontinuous in both the down-web and cross-web directions is more efficiently applied by means of a continuous process. For example, the use of a rotary screen printing process allows a topcoat pattern which is discontinuous in both the down-web and cross-web directions. However, continuous processes such as rotary screen printing require the composition to be coated to be indefinitely stable at room temperature (or at least have a pot-life on the order of several weeks or months) so that the coating process does not need to be halted in order to clean the equipment due to viscous or gelled material.

This indefinite stability at application temperatures may be obtained by the use of a blocked crosslinker. At the application temperatures, the crosslinker remains blocked, so that crosslinking does not take place. Thus, a continuous application process with a long residence time in the coating equipment may be used. After coating, the composition may be crosslinked, for example by heat. The high temperatures initiate the unblocking of the crosslinker, so that crosslinking then occurs. The use of the blocked crosslinkers in accordance with the invention yields a simpler, more efficient manufacturing process.

Pavement marking materials of the invention have greater conformability than can be achieved with a pavement marking material having a more elastic, continuous top layer or a top layer that is discontinuous in only one direction. Practical tests have shown that preferred pavement marking materials of the invention have higher initial and long term adhesion to irregular pavement surfaces than previously known materials. Further, the present invention shows retained reflectivity and whiteness values as good or better than those values showed by the previously known materials with continuous top layers.

Reflective and skid-resistant particles are applied only to the non-continuous top layer. Because there is typically less surface area with a non-continuous top layer to apply particles to, the construction of pavement markings of the invention may require fewer particles and may therefore be less expensive than comparably constructed pavement markings with a continuous top layer or a top layer discontinuous in only one direction. The contrast introduced by a top layer discontinuous in both directions may also provide for improved skid-resistance compared to a continuous top layer or a top layer discontinuous in only one direction. Reflectivity of the pavement marking may also be increased compared to a continuous top layer or a top layer discontinuous in only one direction by selecting the distance between segments of the topcoat.

The novel structure of pavement markings of the invention can impart greater durability, greater conformability, increased retroreflectivity, and increased skid-resistance as compared to a pavement marking made with the same materials applied in a continuous top layer or a top layer discontinuous in only one direction.

The invention will be further explained with reference to the drawings, wherein:
Figure 1 is a plan view of the top of an illustrative embodiment of the invention; and
Figure 2 is an enlarged fragmentary view of Figure 1 taken along line 2-2.

These figures, which are idealized, are not to scale and are intended to be merely illustrative and non-limiting.

As mentioned above, the invention provides a pavement marking material comprising a flexible substantially flat base sheet that is conformable to an irregular pavement surface and a durable, wear-resistant polymeric top layer that is discontinuous in both the down-web and cross-web directions. The polymeric top layer comprises a plurality of segments adhered to one surface of the base sheet whereby each of the plurality of segments are separated in both the cross-web direction and the down-web direction by areas of the uncoated base sheet. A plurality of particles are partially embedded in and protrude from the polymeric top layer. The particles include reflective microspheres and skid-resistant particles.

The discontinuous polymeric top layer of the invention comprises a polyurethane with a blocked diisocyanate crosslinker. The composition comprises a polymer comprising components A, B and C wherein
component A, as hard segment portion, has a T_{g} of 30°C to 100°C, and comprises a copolymer of;
   (i) a monoester of acrylic or methacrylic acid and an aliphatic diol having 2 to 8 carbon atoms, and
   (ii) an ester of acrylic or methacrylic acid and an aliphatic alcohol having 1 to 8 carbon atoms, and optionally a vinyl aromatic monomer as well as N-vinylpyrrolidone or N-vinylcaprolactame, alternatively, Component A may also comprise a hydroxy functional polyesterpolyol with a functionality of 3 or more hydroxyl groups per molecule;
component B, as soft segment portion, comprises an aliphatic polyester polyol with a weight-average molecular weight less than 20,000 and a hydroxy functionality of between 2 and 3; and
component C comprises a blocked polyfunctional isocyanate.

Preferably, sub-component (i) consists of a monoester of acrylic or methacrylic acid and an aliphatic diol having 2 to 4 carbon atoms. Sub-component (ii) preferably consists of an ester of acrylic or methacrylic acid and an aliphatic alcohol having 1 to 4 carbon atoms.

Illustrative examples of suitable monoesters of acrylic or methacrylic acids and aliphatic diols forming sub-component (i) of component A of the polymer of the invention are 2-hydroxyethyl acrylate, 2-hydroxy-1-methylethyl acrylate, 2-hydroxypropyl acrylate, 3-hydroxypropyl acrylate, 2-hydroxybutyl acrylate, 4-hydroxybutyl acrylate, 2-hydroxyethyl methacrylate, 2-hydroxy-1-methylethyl methacrylate, 2-hydroxypropyl methacrylate, 3-hydroxypropyl acrylate and 2-hydroxybutyl methacrylate.

Typically, the monoesters of acrylic or methacrylic acid and aliphatic diols forming sub-component (i) of component A are present in amounts of 5 to 50 % by weight and subcomponent (ii) 50 to 95 % by weight of the total amounts of monomers (i) and (ii) used for the copolymer of component A.

Illustrative examples of suitable esters of acrylic or methacrylic acids and the aliphatic alcohol having 1 to 8 carbon atoms are methyl acrylate, ethyl acrylate, propyl acrylate, isopropyl acrylate, butyl acrylate, isobutyl acrylate, hexyl acrylate, 2-ethylhexyl acrylate, cyclohexyl acrylate, methyl methacrylate, ethyl methacrylate, propyl methacrylate, isopropyl methacrylate, butyl methacrylate, isobutyl methacrylate, hexyl methacrylate, 2-ethylhexyl methacrylate and cyclohexyl methacrylate.

Component A should have a glass transition temperature (T_{g}) of 30°C to 100°C. If the T_{g} of component A is lower than 30°C the entire top layer polymer composition becomes too soft to be used as the top layer of a pavement marking. If the T_{g} is higher than 100°C the composition becomes too brittle to be used as the top layer of a pavement marking.

Component A comprising sub-components (i) and (ii) is present in amounts of from 15 to 80% by weight of total amount of the top layer polymer composition, preferably in amounts of from 30 to 60% by weight.

The weight-average molecular weight of component A consisting essentially of the subcomponents (i) and (ii) is preferably in the range of 1,000 to 500,000 measured by gel permeation chromatography (GPC).

Component B comprises an aliphatic polyester polyol branched or non-branched with a weight-average molecular weight less than 20,000. The polyester polyol of component B can generally be formed by the esterification of a polyol with a polycarboxylic acid or an acid anhydride. Illustrative aliphatic polyols conventionally employed in making the polyester include alkylene glycols, such as ethylene glycol, propylene glycol, butylene glycol and neopentyl glycol and other glycols such as cyclohexane dimethanol, caprolactonediol reaction products and similar type compounds can be used herein.

Illustrative examples of suitable carboxylic acids used in the reaction with the above-described polyols include adipic acid, sebacic acid, glutaric acid and chlorendic acid. The weight-average molecular weight of the aliphatic polyesterpolyol is preferably less than 10,000. The preferred polyesterpolyol component B is poly-epsilon-caprolactonediol having a weight-average molecular weight of 500 to 10,000. Further preferred is a branched polyesterether polyol with a functionality of greater than 2 and less than 3.

Component B is present in the top layer polymer composition in amounts of from 5 to 50% by weight, preferably 15 to 30% by weight based on total amount of the top layer polymer composition.

Component C comprises a blocked polyfunctional isocyanate. The isocyanate moiety is transformed with suitable blocking agents into another moiety which can be regarded as a latent isocyanate group. The isocyanate groups are modified by reaction with a blocking agent such as a phenol, caprolactam, or beta-dicarbonyl components, for example acetic esters or malonesters. The blocking agent prevents the polyisocyanate component from reacting with the polyol component prematurely. Suitable blocking agents are those materials that unblock, for example, at elevated temperatures, thus generating again the isocyanate group. Suitable blocking agents are for example low aliphatic alcohols, triazoles, oximes such as 2-butanone oxime and lactames such as caprolactame. Suitable blocked polyfunctional isocyanates include monomeric polyisocyanates, such as 4,4'-methylenebis(cyclohexyl isocyanate) and isophorone diisocyanate. Dimers or trimers of the diisocyanate are also suitable. Biurets of the isocyanates may also be used. A preferred blocked polyfunctional isocyanate according to the invention is an adduct of 1,6-hexamethylene diisocyanate and 2-butanone oxime. A particularly preferred blocked polyisocyanate is the methylethylketoxime blocked isocyanurate of hexamethylene diisocyanate. The oxime class of blocking agents provide the good storage stability which is usually associated with caprolactame blocking agents, yet release the blocking agent at much lower temperatures than those needed for the caprolactame blocking agents. By good storage stability it is meant that the blocking agent prevents a premature reaction from occurring between isocyanate groups and hydroxyl groups which would increase the viscosity and possibly gel the coating composition.

Blocking agents which may be evaporated after deblocking are preferred, for example 2-butanone oxime. Also preferred are blocking agents that do not result in discoloration of the polyurethane coating.

During subsequent curing of the coating composition at elevated temperatures the isocyanate groups unblock. The blocking agent is released and the polyisocyanates react to form a high molecular weight polymer. The unblocking reaction typically occurs at between approximately 100°C and 180°C. The temperature depends on the particular diisocyanate and particular blocking moiety selected.

A die can be used to continuously or intermittently coat in the web direction. A coating die is typically used for compositions that crosslink at room temperature, since the residence time in the die is relatively short and circulation of the material in the die minimizes dead zones. Dead zones are areas where the material gets hung up or retained, permitting it to begin to increase in viscosity or gel.

Coatings, especially those that are discontinuous in both the down-web and cross-web directions, are more efficiently applied by means of a continuous process. For example, the use of a rotary screen printing process allows a topcoat pattern which is discontinuous in both the down-web and cross-web directions. However, continuous processes such as the rotary screen printing process require the composition to be coated to be infinitely stable (or at least have a pot-life on the order of several weeks or months) so that the coating process does not need to be halted in order to clean the equipment due to viscous or gelled material.

This indefinite stability at application temperatures may be obtained by the use of a blocked crosslinker. At the application temperatures, the crosslinker remains blocked, so that crosslinking does not take place. Thus, a continuous application process with a long residence time in the coating equipment may be used. After coating, the composition may be crosslinked, for example by heat. The high temperatures initiate the unblocking of the crosslinker, so that crosslinking then occurs. The use of the blocked crosslinkers as provided herein yields a simpler, more efficient manufacturing process.

The use of blocked isocyanates allows the formulation of one component polyurethane coatings with a potlife of up to several months at room temperature. The isocyanate moiety is transformed with suitable blocking agents into another moiety which can be regarded as a latent isocyanate group. The isocyanate groups are modified by reaction with a blocking agent such as a phenol, caprolactam, or beta-dicarbonyl components for example acetic esters or malonesters. The blocking agent prevents the polyisocyanate component from reacting with the polyol component prematurely. Suitable blocking agents are those materials that unblock, for example, at elevated temperatures, thus generating again the isocyanate group.

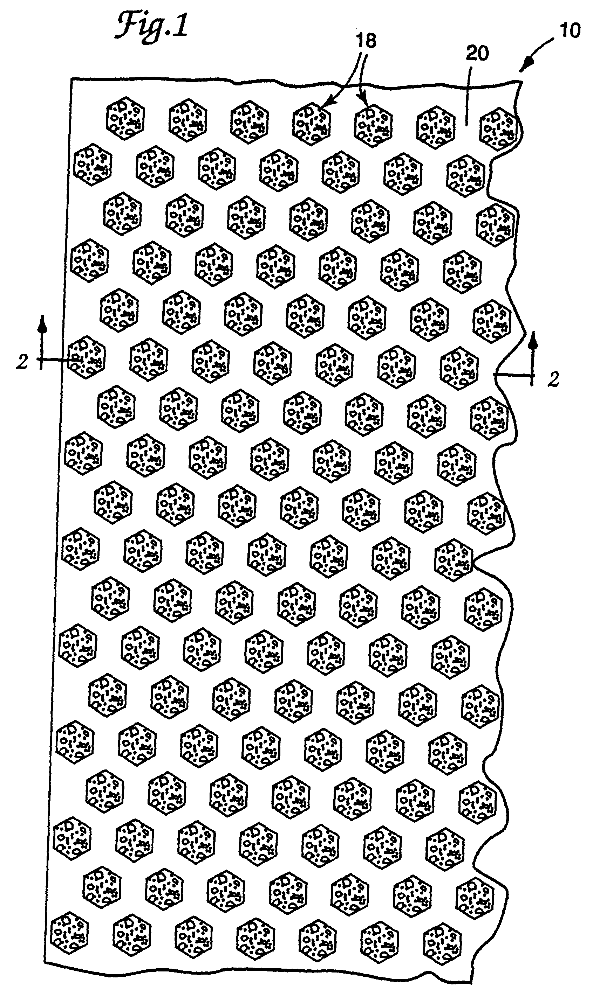

Figure 1 depicts an illustrative embodiment of pavement marking material 10 according to the invention wherein the segments are hexagonally shaped. Segments 18 of the patterned topcoat are separated in both the cross-web and down-web directions by areas of uncoated base sheet 20. A variety of shapes of segments may be used, including but not limited to circles, triangles, and bars. A plurality of retroreflective microspheres and skid resistant granules are embedded in and protrude from segments 18 of the non-continuous top layer.

The segments can be disposed in desired arrangement. Typically they will be arranged in an array made up of a series of generally parallel rows and/or series of generally parallel columns. As will be understood by those skilled in the art, the precise shape of segments and arrangement of the array will be dependent in part upon the desired optical properties of the particular application. For instance, the array may be made up of a rectangular array of parallel rows that are perpendicular to the long axis of the tape and parallel columns that are parallel to the long axis of the tape. Typically the segments will be substantially uniformly spaced apart to impart relatively uniform retroreflective properties and physical properties (such as conformability and retention to surface) across the marking. Other properties to be considered in selection of the pattern of segments for the non-continuous top layer include wear resistance and skid resistance. If desired, the segments may be spaced more closely in one axis than in another axis such that the retroreflective properties and physical properties are anisotropic across the plane of the marking.

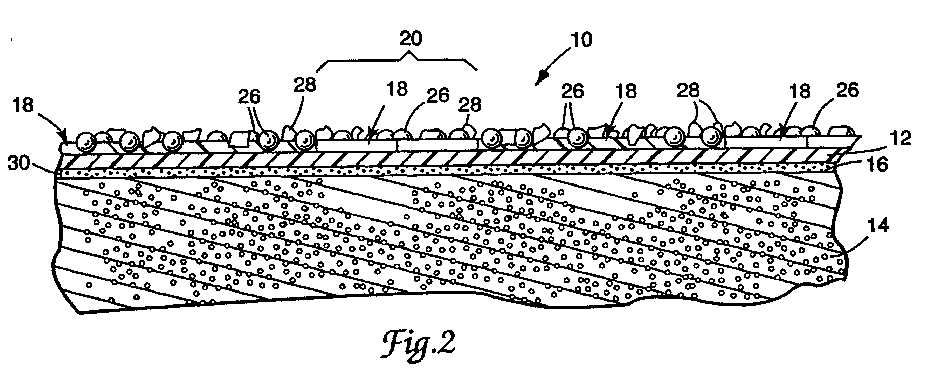

Referring now to Fig. 2, there is shown an enlarged fragmentary piece of pavement marking material 10 according to the present invention. The pavement marking material 10 comprises flexible substantially flat base sheet 12 that is conformable to irregular pavement surface 16.

Pavement marking material 10 has greater conformability than can be achieved with a pavement marking material having a more elastic top layer that is continuous or discontinuous in only the cross-web direction. When a more elastic top layer is deformed in order to conform to an irregular or rough pavement surface, elastic stresses develop in the top layer. These stresses tend to pull back against the adhesive used to hold the pavement marking material to the pavement. Over time, these forces tend to cause the adhesive to fail, after which the pavement marking material would come loose from the pavement.

In the present invention, however, the energy of such elastic stresses does not build up in the non-continuous top layer. Instead, as top layer segment 18 conforms to pavement 14, the areas of uncoated base sheet 20 separating segments 18 in both the down-web and cross-web directions prevent the build up of such stresses. Thus, the elastic stresses that could otherwise cause the pavement marking material 10 to come loose from the pavement 14 are greatly reduced or eliminated. As a result, the present invention has improved long-term adhesion to pavements having rough or irregular surfaces.

This composition of the non-continuous top layer of the invention is designed to deform slightly under stress, so as to actually undergo less abrasive wear than a more rigid top coat. The amount of this deformation is dependent upon the density of the polymeric network.

The coating thickness is approximately 60 to 300 micrometers. Preferably, the coating thickness is about 70 to 150 micrometers, or roughly half the diameter of the embedded microspheres. This relatively thin coating can actually result in better microsphere retention because the microspheres are pushed against and slightly into the conformance layer instead of cracking or popping out as they do when encased in a thick, rigid coating. This cushioning effect is achieved through the close proximity of the microspheres to the conformance layer that results when the top coat is relatively thin.

The top layer also shows good resistance to discoloration from tires that travel over the marking, or from other oil, dirt, or grime the may come into contact with pavement marking material 10.

The base sheet 12 is substantially flat and has substantially no protrusions. Examples of suitable base sheets are the reduced-elasticity sheets disclosed in U.S. Pat. Nos. 4,117,192 and 4,490,432. Such reduced-elasticity base sheets comprise unvulcanized elastomer precursors, extender resins such as chlorinated paraffin, fillers, and non-woven webs such as those made from spun-bonded polyolefins or polyesters.

Base sheet 12 is typically from 500 micrometers (µm) to 1300 µm thick to provide desired conformability and strength to the substrate marking material. Most preferably, base sheet 12 is about 900 µm thick. Below 500 µm, base sheet 12 may not provide sufficient strength or support for pavement marking material 10. Above 1300 µm, marking material 10 may stick up too far from pavement 14 such that snow plows may damage or dislodge marking material 10.

Optionally, pigments may be added to the base sheet 12 for coloration. Titanium dioxide will impart a white color to base sheet 12. Another useful pigment is lead chromate, which imparts a yellow color to base sheet 12. Particulate fillers may also be included in base sheet 12, typically in large amounts, to lower cost and to provide modified properties, such as reinforcement, extending, surface hardness, and abrasion resistance.

A durable, wear-resistant, polymeric top layer 18 that is discontinuous in both the down-web and cross-web directions is applied to one surface of the base sheet 12. Various patterns for the non-continuous top layer will be suitable to provide the desired characteristics of high reflectivity and conformability of the pavement marking material. Other important properties to be considered in selecting a pattern for the non-continuous top layer include low stress concentration, low dirt retention, wear resistance, and skid resistance. Figure 1 depicts an example of an illustrative embodiment of the invention wherein the discontinuous top layer is a pattern of hexagons.

Skid resistance is believed to be increased by the contrast between the uncoated areas of flexible base sheet and segments of polymeric top layer with embedded skid-resistant particles. Likewise, the configuration of the segments of the top layer, as well as the spacing between segments, may be selected to maximize retroreflectivity by minimizing shadowing. Shadowing refers to the vertical aspect of a raised element or microsphere blocking, or shadowing, nearby raised elements or microspheres such that some of the retroreflective microspheres are not visible and thus are not utilized.

Preferably, the polymer of top layer 18 has a Young's modulus of from 20,000 psi (140 MPa) to 300,000 psi (2100 MPa), and more preferably from 50,000 psi (350 MPa) to 100,000 psi (700 MPa). If the modulus is too low, top layer 18 may not have sufficient wear and abrasion resistance properties. If the modulus is too high, then top layer 18 may not have sufficient conformability characteristics.

Top layer 18 may also comprise a variety of inorganic additives such as inert fillers, extenders, and pigments as are used in known pavement marking materials. The various inorganic additives may be treated with a coupling agent such as a silane coupling agent to improve bonding to polyurethane polymers. Inert fillers include alumina; magnesium silicate; magnesium oxide; calcium carbonate; calcium meta silicates; amorphous or crystalline silica; zinc oxide; lead chromate; and zirconium oxide.

Pigments or other coloring agents may be included in top layer 18 in an amount sufficient to color the marking material for a particular use. For example, when used as a pavement marking material, titanium dioxide is a desired pigment and filler to provide a white color and to provide a diffuse reflective background for retroreflective microspheres 26 subsequently embedded in top layer 18, whereas, lead chromate will typically be used to provide a yellow color.

Other pigments including reflective pigments having a large specular component such as aluminum flakes or nacreous pigment flakes, may also be used in the top layer. It is important that the polymer selected for the top layer be light-transmissive, so that light striking the reflective pigments will not be absorbed but will instead be retroreflected so as to be of use to a motor vehicle driver.

Top layer 18 thickness is from at least 60 micrometers (µm) to 300 µm. Preferably, the top layer 18 is from 70 µm to 150 µm thick, and most preferably from 90 µm to 110 µm. If the top layer 18 is not thick enough, the top layer 18 may not provide sufficient bonding to particles subsequently embedded in the top layer, nor sufficient wear resistance or vertical surface for retroreflectivity. If the top layer 18 is too thick, the overall structure may be too rigid to achieve desired conformance characteristics.

A plurality of particles 26 and 28 are embedded in and protrude from segments 18 of the non-continuous top layer. Particles 26 and 28 comprise retroreflective microspheres 26 and skid-resistant granules 28. The particles 26 and 28 may be applied to the still-liquid top layer by a flood coating process which results in a dense packing of particles 26 and 28 in the top layer 18. Alternatively, particles 26 and 28 may be sprinkled or cascaded onto the top layer 18 such that a dense packing of particles 26 and 28 is avoided. The sprinkling process is particularly advantageous to minimize particle usage, to decrease dirt retention between particles, and to optimize retroreflection.

Retroreflective microspheres 26 suitable for use in the present invention include glass microspheres having an index of refraction of from 1.5 to 1.9. Glass microspheres having an index of refraction closer to about 1.5 are less costly and more scratch and chip resistant. However, glass microspheres having an index of refraction of from 1.7 to 1.9 are more effective retroreflectors.

Preferred retroreflective microspheres 26 are disclosed in U.S. Pat. Nos. 4,564,556 and 4,758,469. The preferred microspheres are described as solid, transparent, nonvitreous ceramic spheroids comprising at least one crystalline phase comprised of a metal oxide. These microspheres may also have an amorphous phase, such as an amorphous silica phase. The term nonvitreous means that the microspheres have not been derived from a melt or mixture of raw materials brought to the liquid state at high temperature. These microspheres are extremely resistant to scratching or chipping and can be made with an index of refraction of from 1.4 to 2.6. The combination of ceramic microspheres and thermosetting top layer is critical to the longevity of embodiments of this invention. Preferred microspheres have an index of refraction of 1.7 to 2.0, although microspheres of other indices of refraction will also be suitable. Suitable microspheres have an average diameter of 50 µm to 600 µm, although larger microspheres will also be suitable. Preferred microspheres have an average diameter of 200 µm to 400 µm. The depth of embedment is approximately 45% to 65% of the average diameter of the microspheres. The preferred depth of embedment is 50% to 55%.

Skid-resistant granules 28 are used to provide a marking material having a residual skid resistance in the British Portable Skid Resistance test of at least 50 BPN. BPN means the British Portable Number as measured using a Portable Skid Resistance Tester built by Road Research Laboratory, Crawthorne, Berkshire, England. Suitable skid-resistant granules include white aluminum oxide granules. It has been found that a blend of fine aluminum oxide granules and larger aluminum oxide granules provides acceptable, long-lasting skid-resistance. A preferred skid-resistant granule is disclosed in U.S. Pat. No. 4,937,127. These granules are described as ceramic spheroids that are a fired ceramic comprising a mineral particulate, alumina, and a binder. These spheroids are extremely durable and impart excellent skid-resistant characteristics to pavement marking materials.

Particles 26 and 28 may be treated with a coupling agent that improves adhesion between particles 26 and 28 and top layer segment 18. Preferred agents are silane compounds, such as the aminosilane compounds. The particles may also be treated with a surface modifying agent to increase their surface energy in contact with the liquid phase of the top layer during curing, allowing the microspheres to protrude from this surface. Preferred surface modification agents are fluorocarbons. Alternatively, such agents may be included in top layer segment 18 so that the agent interacts with particles 26 and 28 when the particles 26 and 28 are embedded in top layer 18.

While the top layer is still fluid the particles are delivered into it. The particles are delivered by any suitable method, for example from a hopper. The delivery system is preferably equipped with a means to control the number of particles applied. A preferred particle application method is to drop the particles onto the web (the web being the flexible base sheet with the non-continuous polymeric top layer), and vibrate the web until substantially all the particles come into contact with the polymeric top layer and adhere to it.

An adhesive layer 30 may be carried on the bottom surface of base sheet 12 for application to pavement 14. Alternatively, an adhesive layer 30 may be applied first to pavement 14 after which the substrate marking material 10 is adhered over adhesive layer 30. A suitable adhesive can be readily selected by one skilled in the art. Pressure sensitive adhesives such as those disclosed in European Patent Application No. 91.309941.2 filed October 28, 1991 (published as EP-A-0 488 526) are preferred. Contact adhesives may also be used. An advantage of the present invention is that a greater variety of adhesives can be used with pavement markings of the invention than can be used with pavement markings comprising continuous, relatively more elastic top layers.

### EXAMPLES

The invention will be further explained by the following illustrative examples which are intended to be non-limiting. Unless otherwise indicated, all amounts are expressed in parts by weight.

### EXAMPLE 1

A polyurethane composition was prepared by mixing together 300 parts by weight of a branched polyesteretherpolyol (DESMOPHEN 1150 available from Bayer) and 100 parts by weight of polycaprolactone triol (TONE 301 available from Union Carbide). 400 parts by weight of titanium dioxide (TiPure R 960 available from Union Carbide) and 30 parts by weight of fumed silica (CarbOsil M5 available from Carbot) were dispersed into the polyol mixture. A high speed, high shear mixer was used for dispersion.

After the composition was cooled to room temperature, the catalyst dibutyltindilaurate at 2.0 parts by weight (DABCO T 12 available from Air Products, Inc.) and the blocked isocyanate (DESMODUR BL 3175 available from Bayer) at 768 parts by weight were added to the composition.

The composition was coated through a printing screen with a hexagonal pattern onto a flexible rubber based conformance layer (conformance layer such as that described in U.S. Pat. No. 4,988,555). The rows of equidistant hexagons were staggered, so that every other row was parallel. Each hexagon had a diameter of 8 millimeters. There was a distance between hexagons of 4 millimeters cross-web and 10 millimeters between edges of parallel hexagons down-web. Immediately after coating, ceramic anti-skid particles and glass microspheres with an average diameter of approximately 350 micrometers and a refractive index of 1.5 were sprinkled over the surface of the coating. The microspheres and anti-skid particles had previously been treated with 3-amino propyl triethoxy silane (A 1100 available from Union Carbide).

The resultant material was dried for 1.5 minutes at 80°C, then 1.5 minutes at 130°C, and finally for 1.5 minutes at 190°C to achieve cross-linking of the top layer.

### EXAMPLE 2

A polyurethane composition was prepared by mixing together 200 parts by weight of a branched polyesteretherpolyol (DESMOPHEN 1150 available from Bayer) and 400 parts by weight of polyhydroxyacrylate (JAGOTEX F 239 available from Jaeger). 400 parts by weight of titanium dioxide (TiPure R 960 available from Union Carbide) and 21.7 parts by weight of fumed silica (CarbOsil M5 available from Carbot) were dispersed into the polyol mixture. A high speed, high shear mixer was used for dispersion.

After the composition was cooled to room temperature, the catalyst dibutyltindilaurate at 1.3 parts by weight (DABCO T 12 available from Air Products, Inc.) and the blocked isocyanate (DESMODUR BL 3175 available from Bayer) at 323 parts by weight were added to the composition.

The composition was coated at a thickness of approximately 110 micrometers through a printing screen with a hexagonal pattern onto a flexible rubber based conformance layer (conformance layer such as that described in U.S. Pat. No. 4,988,555). The rows of equidistant hexagons were staggered, so that every other row was parallel. Each hexagon had a diameter of 8 millimeters. There was a distance between hexagons of 4 millimeters cross-web and 10 millimeters between edges of parallel hexagons down-web. Immediately after coating, ceramic anti-skid particles and ceramic microspheres with an average diameter of approximately 350 micrometers and a refractive index of 1.5 were sprinkled over the surface of the coating. The microspheres and anti-skid particles had previously been treated with 3-amino propyl triethoxy silane (A 1100 available from Union Carbide).

The resultant material was dried for 0.5 minutes at 80°C, then 0.5 minutes at 130°C, and finally for 0.5 minutes at 190°C to achieve cross-linking of the top layer.

## Claims

1. A pavement marking material, comprising
a) a flexible base sheet that is conformable to an irregular pavement surface, said base sheet being substantially flat and having substantially no protrusions;
b) a discontinuous polymeric layer adhered to one surface of the base sheet, said polymeric layer formed from a composition comprising a blocked polyisocyanate crosslinker and a plurality of segments adhered to one surface of the base sheet with said segments being separated from one another by a distance of at least about 1.5 millimeters in any direction each of the plurality of segments are separated in both the cross-web direction and the down-web direction by areas of the uncoated base sheet; and
c) a plurality of particles embedded in and protruding from said discontinuous polymeric layer.

2. The article of claim 1 wherein said blocked polyisocyanate is selected from the oxime class of polyisocyanates.

3. The article of anyone of claims 1-2 wherein said flexible base sheet is a polymeric material.

4. The article of anyone of claims 1-3 wherein said discontinuous polymeric layer is applied in a selected pattern.

5. The article of anyone of claims 1-4 wherein said segments are generally parallel.

6. The article of claim 5 wherein said pattern is an array of hexagons.

7. The article of claim 6 wherein said hexagons are arranged in generally parallel rows.

8. The article of claim 7 wherein said hexagons are less than 12 millimeters apart in the down-web direction and less than 6 millimeters apart in the cross-web direction.

9. The article of anyone of claims 1 to 8 wherein a reflective pigment is distributed substantially uniformly throughout said discontinuous polymeric layer.

10. The article of claim 9 wherein said reflective pigment is a specularly reflective pigment selected from the group consisting of pearlescent pigments and aluminum flakes.

11. The article of claim 9 wherein said reflective pigment is titanium dioxide.

12. The article of anyone of claims 9 to 11 wherein said reflective pigment is present in loadings of 17 to 24 percent by weight.

13. The article of anyone of claims 9 to 11 wherein said reflective pigment is present in loadings of 25 to 45 percent by weight.

14. The article of anyone of claims 1 to 13 wherein said particles are selected from the group consisting of retroreflective microspheres and anti-skid particles.

15. The article of claim 14 wherein said particles are retroreflective microspheres.

16. The article of claim 15 wherein said microspheres are of a refractive index between 1.6 and 1.9.

17. The article of claim 15 wherein said microspheres are embedded to a depth of approximately 50 to 60 percent of their average diameter.

18. The article of anyone of claims 1 to 17 wherein said discontinuous polymeric layer is comprised of a polymer with a Young's modulus between 50,000 psi (350 MPa) and 100,000 psi (700 MPa).

19. The article of anyone of claims 1 to 18 wherein said segments have a ratio of longest dimension to shortest dimension of no greater than 3 to 1.

20. The article of anyone of claims 1 to 19 wherein the distance between said segments is no greater than about 20 millimeters in any direction.

21. A method of making a pavement marking material comprising the steps of :
1) providing a flexible base sheet that is conformable to an irregular pavement surface, said base sheet being substantially flat and having substantially no protrusions;
2) applying a discontinuous polymeric layer adhered to one surface of the base sheet by means of a continuous process, said polymeric layer comprising a blocked polyisocyanate crosslinker and a plurality of segments adhered to one surface of the base sheet with said segments being separated from one another by a distance of at least about 1.5 millimeters in any direction each of the plurality of segments are separated in both the cross-web direction and the down-web direction by areas of the uncoated base sheet; and
3) depositing a plurality of particles so as to partially embed then in said discontinuous polymeric coating.

22. The method of claim 21 comprising the additional step of applying an adhesive to the second side of the flexible base sheet.

23. A method of using a pavement marking material comprising the step of adhering the pavement marking material of anyone of claims 1 to 20 to a road.

## Patentansprüche

1. Straßenmarkierungsmaterial, umfassend
a) eine flexible Grundfolie, die sich an eine unregelmäßige Straßenoberfläche anpassen kann, wobei die Grundfolie im wesentlichen flach ist und im wesentlichen keine Ausbuchtungen hat;
b) eine diskontinuierliche polymere Schicht, die an einer Oberfläche der Grundfolie haftet, wobei die polymere Schicht aus einer Zusammensetzung erzeugt wird, umfassend ein blockiertes Polyisocyanatvernetzungsmittel und eine Vielzahl von Segmenten, die an einer Oberfläche der Grundfolie haften, wobei diese Segmente in jeder Richtung wenigstens etwa 1,5 mm voneinander entfernt sind, wobei jedes aus der Vielzahl von Segmenten sowohl in Quer- als auch in Längsrichtung der Bahn durch Flächen der unbeschichteten Grundfolie getrennt sind; und
c) eine Vielzahl von Teilchen, die in die diskontinuierliche polymere Schicht eingebettet sind und daraus hervorstehen.

2. Gegenstand nach Anspruch 1, wobei das blockierte Polyisocyanat aus der Klasse der Oxime von Polyisocyanaten gewählt wird.

3. Gegenstand nach einem der Ansprüche 1 und 2, wobei die flexible Grundfolie ein polymeres Material ist.

4. Gegenstand nach einem der Ansprüche 1 bis 3, wobei die diskontinuierliche polymere Schicht in einem ausgewählten Muster aufgetragen wird.

5. Gegenstand nach einem der Ansprüche 1 bis 4, wobei die Segmente im allgemeinen parallel sind.

6. Gegenstand nach Anspruch 5, wobei das Muster eine Anordnung von Sechsecken ist.

7. Gegenstand nach Anspruch 6, wobei die Sechsecke in im allgemeinen parallelen Reihen angeordnet sind.

8. Gegenstand nach Anspruch 7, wobei die Sechsecke weniger als 12 mm in der Längsrichtung der Bahn und weniger als 6 mm in der Querrichtung der Bahn voneinander entfernt sind.

9. Gegenstand nach einem der Ansprüche 1 bis 8, wobei ein reflektierendes Pigment im wesentlichen gleichförmig in der gesamten diskontinuierlichen polymeren Schicht verteilt ist.

10. Gegenstand nach Anspruch 9, wobei das reflektierende Pigment ein spiegelnd reflektierendes Pigment ist, ausgewählt aus perlmuttglänzenden Pigmenten und Aluminiumblättchen.

11. Gegenstand nach Anspruch 9, wobei das reflektierende Pigment Titandioxid ist.

12. Gegenstand nach einem der Ansprüche 9 bis 11, wobei das reflektierende Pigment mit Beladungen von 17 bis 24 Gew.% vorliegt.

13. Gegenstand nach einem der Ansprüche 9 bis 11, wobei das reflektierende Pigment mit Beladungen von 25 bis 45 Gew.% vorliegt.

14. Gegenstand nach einem der Ansprüche 1 bis 13, wobei die Teilchen aus retroreflektierenden Mikrokugeln und rutschhemmenden Teilchen ausgewählt werden.

15. Gegenstand nach Anspruch 14, wobei die Teilchen retroreflektierende Mikrokugeln sind.

16. Gegenstand nach Anspruch 15, wobei die Mikrokugeln einen Brechungsindex zwischen 1,6 und 1,9 besitzen.

17. Gegenstand nach Anspruch 15, wobei die Mikrokugeln bis zu einer Tiefe von ungefähr 50 bis 60% ihres mittleren Durchmessers eingebettet sind.

18. Gegenstand nach einem der Ansprüche 1 bis 17, wobei die diskontinuierliche polymere Schicht ein Polymer mit einem Youngschen Modul zwischen 50.000 psi (350 MPa) und 100.000 psi (700 MPa) umfasst.

19. Gegenstand nach einem der Ansprüche 1 bis 18, wobei die Segmente ein Verhältnis von längster zu kürzester Abmessung von nicht mehr als 3 zu 1 haben.

20. Gegenstand nach einem der Ansprüche 1 bis 19, wobei der Abstand zwischen den Segmenten in jeder Richtung nicht größer als etwa 20 mm ist.

21. Verfahren zur Herstellung von Straßenmarkierungsmaterial, umfassend die Schritte
1) Bereitstellen einer flexiblen Grundfolie, die sich an eine unregelmäßige Straßenoberfläche anpassen kann, wobei die Grundfolie im wesentlichen flach ist und im wesentlichen keine Ausbuchtungen hat;
2) Aufbringen einer diskontinuierlichen polymeren Schicht, die an einer Oberfläche der Grundfolie haftet, mittels eines kontinuierlichen Verfahrens, wobei die polymere Schicht ein blockiertes Polyisocyanatvemetzungsmittel und eine Vielzahl von Segmenten, die an einer Oberfläche der Grundfolie haften, umfasst, wobei diese Segmente in jeder Richtung wenigstens etwa 1,5 mm voneinander entfernt sind, wobei jedes aus der Vielzahl von Segmenten sowohl in Quer- als auch in Längsrichtung der Bahn durch Flächen der unbeschichteten Grundfolie getrennt sind; und
3) Aufbringen einer Vielzahl von Teilchen, so dass sie teilweise in der diskontinuierlichen polymeren Beschichtung eingebettet werden.

22. Verfahren nach Anspruch 21, umfassend den zusätzlichen Schritt des Auftragens eines Klebstoffs auf die zweite Seite der flexible Grundfolie

23. Verfahren zur Verwendung von Straßenmarkierungsmaterial, umfassend den Schritt des Haftens von Straßenmarkierungsmaterial nach einem der Ansprüche 1 bis 20 an einer Straße.

## Revendications

1. Matériau de marquage de chaussée, comprenant
(a) une feuille de base flexible qui est déformable selon une surface de chaussée irrégulière, ladite feuille de base étant essentiellement plane et n'ayant essentiellement pas d'aspérités ;
(b) une couche polymérique discontinue collée à une surface de la feuille de base, ladite couche polymérique formée à partir d'une composition comprenant un agent de réticulation de type polyisocyanate bloqué et une multiplicité de segments collés à une surface de la feuille de base avec lesdits segments étant séparés les uns des autres par une distance d'au moins environ 1,5 millimètres dans une direction quelconque, chacun des segments de la multiplicité est séparé à la fois dans le sens transversal et le sens longitudinal par des zones non revêtues de la feuille de base ; et
(c) une multiplicité de particules enrobées dans ladite couche polymérique discontinue et dépassant de celle-ci.

2. Article selon la revendication 1 dans lequel ledit polyisocyanate bloqué est choisi parmi la classe de polyisocyanates de type oxime.

3. Article selon l'une quelconque des revendications 1 et 2 dans lequel ladite couche de base flexible est un matériau polymérique.

4. Article selon l'une quelconque des revendications 1 à 3 dans lequel ladite couche polymérique discontinue est appliquée en un motif choisi.

5. Article selon l'une quelconque des revendications 1 à 4 dans lequel lesdits segments sont généralement parallèles.

6. Article selon la revendication 5 dans lequel ledit motif est un réseau d'hexagones.

7. Article selon la revendication 6 dans lequel lesdits hexagones sont disposés en rangées généralement parallèles.

8. Article selon la revendication 7 dans lequel lesdits hexagones ont un écartement inférieur à 12 millimètres dans la direction longitudinale et inférieur à 6 millimètres dans la direction transversale.

9. Article selon l'une quelconque des revendications 1 à 8 dans lequel un pigment réfléchissant est réparti essentiellement uniformément à travers ladite couche polymérique discontinue.

10. Article selon la revendication 9 dans lequel ledit pigment réfléchissant est un pigment réfléchissant spéculaire choisi parmi les pigments opalescents et les paillettes d'aluminium.

11. Article selon la revendication 9 dans lequel ledit pigment réfléchissant est le dioxyde de titane.

12. Article selon l'une quelconque des revendications 9 à 11 dans lequel ledit pigment réfléchissant est présent dans des taux de 17 à 24 pour cent en poids.

13. Article selon l'une quelconque des revendications 9 à 11 dans lequel ledit pigment réfléchissant est présent dans des taux de 25 à 45 pour cent en poids.

14. Article selon l'une quelconque des revendications 1 à 13 dans lequel lesdites particules sont choisies parmi les microsphères rétroréfléchissantes et les particules antidérapantes.

15. Article selon la revendication 14 dans lequel lesdites particules sont des microsphères rétroréfléchissantes.

16. Article selon la revendication 15 dans lequel lesdites microsphères ont un indice de diffraction compris entre 1,6 et 1,9.

17. Article selon la revendication 15 dans lequel lesdites microsphères sont enrobées à une profondeur d'approximativement 50 à 60 pour cent de leur diamètre moyen.

18. Article selon l'une quelconque des revendications 1 à 17 dans lequel ladite couche polymérique discontinue comprend un polymère ayant un module d'Young compris entre 50000 psi (350 MPa) et 100000 psi (700 MPa).

19. Article selon l'une quelconque des revendications 1 à 18 dans lequel lesdits segments ont un rapport de la dimension la plus longue à la dimension la plus courte non supérieur à 3 sur 1.

20. Article selon l'une quelconque des revendications 1 à 19 dans lequel la distance entre lesdits segments n'est pas supérieure à environ 20 millimètres dans une direction quelconque.

21. Procédé de fabrication d'un matériau de marquage de chaussée comprenant les étapes consistant :
1) à prendre une feuille de base flexible qui est déformable sur une surface de chaussée irrégulière, ladite feuille de base étant essentiellement plane et n'ayant essentiellement pas d'aspérités ;
2) à appliquer une couche de polymérique discontinue collée sur une surface de la feuille de base au moyen d'un procédé continu, ladite couche polymérique comprenant un agent de réticulation de type polyisocyanate bloqué et une multiplicité de segments collés à une surface de la feuille de base avec lesdits segments étant séparés les uns des autres par une distance d'au moins environ 1,5 millimètres dans une direction quelconque, chacun des segments de la multiplicité est séparé à la fois dans le sens transversal et le sens longitudinal par des zones non revêtues de la feuille de base ; et
3) à déposer une multiplicité de particules de manière à les enrober partiellement dans ledit revêtement polymérique discontinu.

22. Procédé selon la revendication 21 comprenant l'étape additionnelle consistant à appliquer un adhésif à la seconde face de la feuille de base flexible.

23. Procédé d'utilisation d'un matériau de marquage de chaussée comprenant l'étape consistant à faire adhérer le matériau de marquage de chaussée selon l'une quelconque des revendications 1 à 20 à une route.
